Europäisches Patentamt

European Patent Office

Office européen des brevets

(11) Publication number: **0 045 992**
**B1**

(12) **EUROPEAN PATENT SPECIFICATION**

(45) Date of publication of patent specification: 29.05.85

(51) Int. Cl.⁴: **C 08 L 27/06, C 08 L 25/12**

(21) Application number: 81200878.7

(22) Date of filing: 04.08.81

(54) Polymer composition.

(30) Priority: 08.08.80 NL 8004522

(43) Date of publication of application:
17.02.82 Bulletin 82/07

(45) Publication of the grant of the patent:
29.05.85 Bulletin 85/22

(84) Designated Contracting States:
AT BE CH DE FR GB IT LI NL SE

(56) References cited:
DE-A-2 235 052
FR-A-2 197 029
US-A-3 658 950

CHEMICAL ABSTRACTS, vol. 81, 1974, page 93,
abstract 154021s Columbus, Ohio, US

The file contains technical information
submitted after the application was filed and
not included in this specification

(73) Proprietor: STAMICARBON B.V.
Postbus 10
NL-6160 MC Geleen (NL)

(72) Inventor: Schepers, Herman Augustinus
Johannes
Leentstraat 33
NL-6171 LC Stein (L.) (NL)

(74) Representative: Hatzmann, Marinus Jan et al
OCTROOIBUREAU DSM P.O.Box 9
NL-6160 MA Geleen (NL)

Courier Press, Leamington Spa, England.

## 0 045 992

**Description**

The invention relates to an impact-resistant polymer composition based on a copolymer of an unsaturated nitrile, a substantially saturated rubber, a chlorinated polyethylene, and a vinyl chloride polymer.

In general, an impact-resistant polymer composition based on an unsaturated nitrile contains a graft polymer consisting of a rubber with, grafted on it, one or more monomers, such as styrene, α-methylstyrene, acrylonitrile, vinylchloride, maleic anhydride and/or one or more acrylates. A typical example of such polymer compositions is ABS (copolymer of styrene and acrylonitrile grafted onto a butadiene rubber). Owing to the fact that part of the monomers forming the continuous phase (matrix) of the polymer composition is grafted onto the rubber, these compositions possess high impact resistance, even at low temperatures (−20°C).

For the rubber, polybutadiene or a related rubber is used in most cases. These rubbers are substantially unsaturated in their main chain, which makes them sensitive to oxidation when exposed to light and/or molecular oxygen. This results in a strong deterioration of the physical and mechanical properties of objects made of such polymer compositions, so that they cannot be used for outdoor applications without special protection.

To solve this problem it has been proposed to replace the rubber in the polymer compositions by a substantially saturated rubber, for instance an ethylene-propylene or an ethylene-propylenediene rubber. In this connection reference may be made for instance to the Netherlands Patent Applications 7104841 and 7809633 laid open to inspection.

In this way a polymer composition is obtained which combines good impact resistance with good UV stability.

However, a disadvantage of these graft copolymers is their rather poor flow behaviour, which keeps the processing speed low and, especially where intricate objects are to be produced, may lead to problems in filling the mould. In comparison with polymer mixtures, these graft copolymers also require the use of a rather involved production process.

According to the German Auslegeschrift 2235052 it is possible to improve the impact resistance of polymer compositions based on a copolymer of styrene and acrylonitrile, a substantially saturated rubber and a chlorinated polyethylene, by adding small quantities of polyvinylchloride (about 3%). According to the Auslegeschrift, the impact-resistance is improved in this way. In an absolute sense the value of the impact resistance remains low, and it has been found that the rigidity (flexural modulus) of these compositions is very low.

The object of the invention is to provide a polymer composition based on a copolymer of an unsaturated nitrile, a substantially saturated rubber, a chlorinated polyethylene and a vinylchloride polymer combining a good impact resistance with a high flexural modulus.

To this end the invention is characterized in that the polymer composition comprises:
a. 50—95 parts by weight of
  a.1. 5—70% wt. of one or more polymers obtained by polymerizing a mixture of
      10—90% wt. styrene and/or styrene derivatives, and
      90—10% wt. acrylonitrile and/or methacrylonitrile, and
      0—20% wt. of one or more other monomers, and
  a.2. 95—30% wt. vinylchloride polymer, and
b. 5—50 parts by weight of:
  b.1. a substantially saturated rubber, and
  b.2. chlorinated polyethylene,
in which overall polymer composition the vinylchloride polymer content is not lower than 25% by weight.

Surprisingly, it has been found that such a polymer composition has a high impact resistance. The impact resistance of the polymer composition compares with that of a high-impact ABS. Even the impact resistance at low temperature is still considerable.

Also, the polymer composition according to the invention has an unexpectedly high rigidity (flexural modulus). This is unexpected, because in general the rigidity decreases when the impact resistance becomes higher.

An additional advantage offered by the polymer composition according to the invention is that the proportion of the constituents, viz. rubber, chlorinated polyethylene, copolymer of unsaturated nitrile, and vinylchloride polymer, can be varied within wide limits. This means that there is very great freedom in making polymer compositions with a wide gamut of properties, such as rigidity, heat distortion temperature (Vicat, HDT), impact strength, flame retardant characteristics, gloss, in-mould shrinkage, flow and deformability, of the resultant mixtures, without it being necessary to modify the preparation of any of the components, as has to be done for preparation of the known products based on graft copolymers.

It is highly surprising that the polymer composition according to the invention should combine good impact resistance with high rigidity.

It is a known fact, which is, indeed, confirmed by the examples, that mixtures of a styrene-acrylonitrile (SAN) with polyvinylchloride (PVC) have low impact resistance. Equally, mixtures of SAN and PVC with

2

chlorinated polyethylene or a rubber are little impact resistant. Moreover, in view of the total amount of PVC, rubber and chlorinated polyethylene, the rigidity would be expected to be unacceptably low.

However, it has been found that both the impact resistance and the rigidity of the polymer composition according to the invention remain on a good level. In dependence on the values desired, it is possible by varying the mixing ratios to adapt the ratio between impact resistance and rigidity to the requirements in a given case.

By preference, the quantity of rubber and chlorinated polyethylene together is at least 10% wt., related to the total polymer composition. Although smaller amounts may well be used, especially if the product is desired to combine high rigidity with comparatively low impact resistance, the preferred composition has the optimum ratio between rigidity and impact resistance.

In view of the minimum rigidity desired, preference is given to a polymer composition containing not more than 40% wt., more in particular not more than 25% wt., of rubber and chlorinated polyethylene. The best value for the amount of chlorinated polyethylene and rubber together also depends on the type of chlorinated polyethylene used.

To obtain good impact resistance it is necessary that the polymer composition contains a minimum amount of the vinylchloride polymer. The upper limit to the quantity of vinylchloride polymer, and the ratio between vinylchloride polymer and copolymer of an unsaturated nitrile, are determined mainly by the requirements as to impact resistance, heat resistance and flame retarding characteristics. An important point is that a larger proportion of copolymer leads to better heat resistance but has an unfavourable effect on the impact resistance and the flame retarding characteristics. The effect of the use of a higher vinylchloride polymer content is just the opposite. In addition, this will cause a decrease in rigidity (for equal proportions of rubber and chlorinated polyethylene).

By preference the polymer composition according to the invention comprises:

a.1 10—65% wt. of a copolymer of acrylonitrile and styrene and/or α-methylstyrene,

a.2 25—80% wt. polyvinylchloride,

b.1 5—20% wt. rubber,

b.2 5—20% wt. chlorinated polyethylene,

c 0—10% wt. additives.

Suitable substantially saturated rubbers are rubbers containing no or few unsaturations in their main chain, i.e. rubbers containing fewer than 2, by preference fewer than 1.5, double bonds per 100 carbon atoms. The rubbers may have unsaturation in their side chains, however, which may be utilized for instance for cross-linking.

Rubbers that are particularly suited for application in the process according to the invention are ethylene-propylene copolymers (so-called EP rubbers), and ethylene-propylene copolymers containing copolymerized other poly-unsaturated monomers (so-called EPT rubbers), as well as butyl rubber (i.e. a polymer based on isobutylene), chlorobutyl rubber, acrylate rubber, and ethylenevinylacetate copolymers of high vinylacetate content, or mixtures of two or more of these rubbers. Examples of poly-unsaturated monomers include hexadiene-1,4, dicyclopentadiene, tricyclopentadiene, 5-vinylnorbornene-2, 5-ethylidene-norbornene-2, 5-ethylidenenorbornene-2, 5-methylenenorbornene-2, 5-(2-propyl)norbornene-2, 5-(5-hexenyl)norbornene-2 4,7,8,9-tetrahydroindene, and isopropylidenetetrahydroindene.

As it is not essential for the polymer composition to be vulcanized, it is not necessary to use poly-unsaturated monomers. Hence it may be economically advantageous to use ethylene-propylene rubber in the polymer composition.

In certain cases it may be advantageous to cross-link all or part of the rubber. This can be done in the usual manner, for instance by means of peroxides; also use may be made of chemically modified rubber.

The chlorinated polyethylene or a mixture of two or more chlorinated polyethylene that is suitable for use in the polymer compositions according to the invention can be prepared in a known way by chlorinating polyethylene in solution, in suspension or in the gas phase. In this connection reference is made to the Netherlands patent applications 7311780 and 7701599 laid open to inspection. By preference the starting material used is high-density polyethylene, i.e. polyethylene having a density of between 935 and 965 kg/m³, which may have been prepared by means of a catalyst on the basis of transition metals.

In a preferred way of realizing the invention, use is made of a chlorinated polyethylene having a chlorine content of between 15 and 50 wt.%, more in particular between 15 and 30% wt.%.

Further, the chlorinated polyethylene preferably has a crystallinity value (measured by Differential Scanning Calorimeter—DSC) that is upwards of 10%, more in particular between 15 and 40% (2nd heating curve).

The weight ratio between the chlorinated polyethylene and the rubber is preferably between 1:20 and 20:1. Polymer compositions in which the ratio is between these limits have particularly good impact resistance, also at low temperature (−20°C).

Optimum properties are obtained if the weight ratio of chlorinated polyethylene and substantially saturated rubber is between 1:4 and 4:1.

In another preferred way of realizing the invention, use is made of a chlorinated polyethylene having a chlorine content of 30—40 wt.% and a DSC crystallinity of 0—7%, with the weight ratio of rubber to chlorinated polyethylene in the polymer composition being between 2:1 and 1:10.

3

The crystallinity is determined in a differential scanning calorimeter by first heating a sample at +150°C for 5 minutes, next cooling it to +50°C at the rate of 5°C a minute, and then heating it again to +150°C at the same rate of 5°C a minute. During this heating-up phase the melting heat is measured. The crystallinity is now determined by means of the following formula:

$$\text{crystallinity (\%)} = \frac{\text{melting value measured (J/g)}}{\text{theoretical melting heat of } 100\% \text{ crystalline polyethylene (J/G)}} \times 100\%$$

The glass transition temperature of the chlorinated polyethylene may be higher than or equal to −15°C. The upper limit here indicated is not critical. In practice the upper limit of the glass transition temperature of chlorinated polyethylene will be dictated by the requirements that are to be satisfied as to crystallinity and chlorine content. This limit is at about +10°C.

The term glass transition temperature as used here is meant to denote the temperature at which the maximum in the damping (G'', loss modulus) is obtained that is characteristic of the type of chlorinated polyethylene, measured by means of a torsion-damping meter at a frequency of 0.2153 Hz and a heating rate of 1°C a minute.

It should be remarked in this connection that usually chlorinated polyethylene has two transition temperatures. In general, one is around −120°C. The other transition temperature has a higher value and varies with the way in which the chlorinated polyethylene has been prepared. In general, it is the latter transition temperature to which reference is made in literature when the glass transition temperature of chlorinated polyethylene is mentioned. Therefore, it is this temperature which is given as the glass temperature of chlorinated polyethylene in the present patent application.

If the choice of a chlorinated polyethylene with a specific combination of chlorine content, DSC crystallinity and—optionally—glass transition temperature is made according to the preferred modes of realization of the process according to the invention, this brings the advantage of an additional improvement of the impact resistance with retention of high rigidity. It is, therefore, important that in this case the chlorination conditions be chosen such that a comparatively high proportion of the resultant polyethylene is crystalline. This can be achieved notably by carrying out the chlorination at comparatively low temperatures. In this way a specific distribution of chlorine atoms over the polymer molecule is obtained, which manifests itself in a relatively high glass transition temperature.

The preparation of the copolymer of an unsaturated nitrile can be done in a continuous or a batch process, suitably with the use of known polymerization techniques, such as emulsion, suspension, solution and bulk polymerization, or by methods combining such techniques.

As copolymer any of the various copolymers of acrylonitrile or derivatives thereof with vinylaromatic compounds may be applied.

In principle, use is made of a copolymer of acrylonitrile with styrene and/or α-methylstyrene. This copolymer may additionally contain a (minor) quantity of one or more other monomers.

Examples of copolymers that may be used are styrene-acrylonitrile copolymer, α-methylstyrene-acrylonitrile copolymer, styrene- or α-methylstyrene-acrylonitrile-maleic anhydride terpolymer, and styrene-α-methylstyrene-acrylonitrile terpolymer, as well as copolymers of acrylonitrile with halogenated styrene, or mixtures of two or more of these polymers.

The vinylchloride polymer used by preference is polyvinylchloride. In certain applications it may be advantageous to use copolymers of vinylchloride that may contain up to 30 mol.% of one or more monomers copolymerizable with vinylchloride. Copolymers copolymerized with vinylchloride copolymers may be alkenes with 2—12 carbon atoms, e.g. ethylene, propylene, butylene, isobutylene, etc., as well as dienes, such as butadiene or isoprene. Vinylchloride may also be copolymerized with vinyl esters and allyl esters, such as vinylacetate, vinylchloroacetate, vinylpropionate, vinylbutyrate, allylacetate etc., or with vinylaromatic compounds, e.g. styrene, α-methylstyrene, chlorostyrene, vinyltoluene, or with other monomers copolymerizable with vinylchloride, such as vinylidene-chloride, maleic esters, etc. Vinylchloride may also be graft-polymerized to a polymer base, such as ethylene-propylene copolymers or terpolymers, ethylene-vinylacetate copolymers, etc. It may also be advantageous to use as vinylchloride polymer chlorinated polymers or copolymers of vinylchloride, for instance if the polymer composition is to have improved heat resistance.

The polymer composition according to the invention can be made in a known way from various starting materials, by application of the usual methods. In dependence on the form in which the starting materials are available (powder, crumb, liquid) various devices or combinations of devices may be used, such as a high-speed mixer, a Banbury mixer, a kneader-extruder, and such like.

As impact-resistant polymer compositions are supplied mainly in the form of granulates by producers, the polymer compositions will in general be granulated by means of an extruder, after the starting materials have been mixed. In this extruder also the mixing may be effected.

To the polymer compositions the usual additives may be supplied, such as anti-oxidants, antistatic agents, release agents, fillers, colourants, pigments, UV stabilizers, fungicides, etc.

The polymer composition according to the invention is particularly suitable for making objects that have to satisfy high requirements as regards mechanical and physical properties, such as impact resistance, rigidity, etc., especially if these properties have to be combined with good UV resistance.

The polymer composition is suited for many applications. Many kinds of impact-resistant objects can be made from it, for instance, such as bottles, tubes, furniture pieces, motorcar dashboards, casings for electronic and domestic equipment, shoe heels, caravans, skis and surfboards.

An additional advantage of the polymer composition according to the invention is that the composition has good flame extinction of itself. In dependence on the specific proportions of the various components, the composition satisfies the requirements of classes V-1 or V-0 according to test UL-94. Optionally the fire behaviour can be further improved by adding flame-extinguishing compounds, such as metal oxides (antimonytrioxide, zincoxide, titaniumoxide, zinctitanate).

The invention also relates to objects made in whole or in part of the polymer composition described above.

The invention will now be elucidated by means of some examples and comparative examples.

In all examples use was made of a copolymer of styrene and acrylonitrile (SAN) with a nitrogen content of 6.9% wt. and a viscosity value of 0.64 dl/g (0.1 g in 100 ml acetone at +20°C).

The rubber used was an ethylene-propylene-diene rubber having an ethylene content of 74% wt. and a diene content (ethylidene-norbornene) of 1.85% wt. The Hoekstra plasticity of the rubber was 53.

The vinylchloride polymer used was polyvinylchloride (PVC) with a K value (acc. to Fikentscher) of about 70.

The chlorinated polyethylene (CPE) applied have the characteristics shown in Table 1.

TABLE 1

| CPE | Chlorine content % wt. | Crystallinity % | Glass transition temp. °C |
|---|---|---|---|
| A | 25.7 | 20 | +7 |
| B | 26.8 | 28 | 0 |
| C | 34.5 | 4 | −15 |
| D | 24.4 | 10 | −21.5 |

Example I and comparative examples a through d

Starting from a mixture of 50 parts of PVC and 50 parts of SAN a number of compositions were prepared with incorporation of chlorinated polyethylene and/or rubber.

Impact resistance and rigidity of these compositions and of the PVC/SAN mixture were determined. The results are shown in Table 2.

TABLE 2

| Example | SAN parts wt. | PVC parts wt. | Rubber parts wt. | CPE type | Parts wt. | Impact res.* kJ/m$^2$ | Rigidity** N/mm$^2$ |
|---|---|---|---|---|---|---|---|
| a | 50 | 50 | — | — | — | 2.0 | 3360 |
| b | 42.5 | 42.5 | — | A | 15 | 2.8 | 2560 |
| c | 42.5 | 42.5 | — | C | 15 | 3.9 | 2520 |
| d | 42.5 | 42.5 | 15 | — | — | 2.7 | 2220 |
| I | 42.5 | 42.5 | 7.5 | A | 7.5 | 47.7 | 2370 |

*ASTM D 256
**ASTM D 790 (flexural modulus)

These examples clearly show that the SAN/PVC mixture, the SAN/PVC/rubber mixture and the SAN/PVC/CPE mixture none of them possess a reasonable impact-resistance value, whereas the mixture composed of four components does have very good impact resistance combined with high rigidity.

5

Examples II through V and comparative examples e, f, g

A number of polymer compositions were prepared with variation of the SAN/PVC ratio at constant rubber and chlorinated polyethylene contents.

TABLE 3

| Example | SAN parts wt. | PVC parts wt. | Rubber parts wt. | CPE type | Parts wt. | Impact res.* kJ/m$^2$ | Rigidity** N/mm$^2$ |
|---------|------|------|--------|-----|-----|------|------|
| e | 85 | — | 7.5 | A | 7.5 | 2.3 | 2630 |
| f | 63.75 | 21.25 | 7.5 | A | 7.5 | 13.0 | 2510 |
| II | 56.7 | 28.3 | 7.5 | A | 7.5 | 31.2 | 2490 |
| III | 42.5 | 42.5 | 7.5 | A | 7.5 | 47.7 | 2370 |
| IV | 28.3 | 56.7 | 7.5 | A | 7.5 | 72.2 | 2340 |
| V | 21.25 | 63.75 | 7.5 | A | 7.5 | 80.5 | 2190 |
| g | — | 85 | 7.5 | A | 7.5 | 80.8 | 1870 |

* and ** see Table 2.

Examples VI through XII

The following examples illustrate how at constant SAN/PVC ratio and constant rubber/CPE ratio the properties of the polymer composition are affected by the absolute quantities of rubber and CPE.

TABLE 4

| Example | SAN parts wt. | PVC parts wt. | Rubber parts wt. | CPE type | Parts wt. | Impact res.* kJ/m$^2$ | Rigidity** N/mm$^2$ |
|---------|------|------|--------|-----|-----|------|------|
| VI | 45 | 45 | 5 | A | 5 | 5.0 | 2740 |
| VII | 43.5 | 43.5 | 6.5 | A | 6.5 | 19.9 | 2490 |
| VIII | 42.5 | 42.5 | 7.5 | A | 7.5 | 47.7 | 2370 |
| IX | 37.5 | 37.5 | 12.5 | A | 12.5 | 65.0 | 1730 |
| X | 40.0 | 40.0 | 6 | C | 14 | 28.8 | 2210 |
| XI | 37.5 | 37.5 | 7.5 | C | 17.5 | 70.5 | 1890 |
| XII | 35.0 | 35.0 | 9 | C | 21 | 82.0 | 1490 |

* and ** see Table 2

Examples XIII through XV

These examples show the influence of the type of the chlorinated polyethylene on the properties of the polymer composition.

TABLE 5

| Example | SAN parts wt. | PVC parts wt. | CPE type | Parts wt. | Rubber parts wt. | Impact res.* kJ/m² | Rigidity** N/mm² |
|---------|---------------|---------------|----------|-----------|------------------|---------------------|--------------------|
| XIII | 37.5 | 37.5 | B | 12.5 | 12.5 | 57.5 | 1780 |
| XIV | 37.5 | 37.5 | D | 12.5 | 12.5 | 1660 | 1660 |
| XV | 37.5 | 37.5 | A | 12.5 | 12.5 | 65.0 | 1730 |

\* and \*\* see Table 2

Examples XVI through XIX and comparative examples h, j, k

As do examples a through g and II through V, these examples show the influence of the SAN/PVC ratio on the properties of the polymer composition.

TABLE 6

| Example | SAN parts wt. | PVC parts wt. | CPE type | Parts wt. | Rubber parts wt. | Impact res.* kJ/m² | Rigidity N/mm² |
|---------|---------------|---------------|----------|-----------|------------------|---------------------|-----------------|
| h | 75 | — | A | 12.5 | 12.5 | 37 | 2130 |
| j | 56.25 | 18.75 | A | 12.5 | 12.5 | 44.4 | 1900 |
| XVI | 50 | 25 | A | 12.5 | 12.5 | 49.5 | 1890 |
| XVII | 37.5 | 37.5 | A | 12.5 | 12.5 | 65 | 1730 |
| XVIII | 25 | 50 | A | 12.5 | 12.5 | 50.9 | 1580 |
| XIX | 18.75 | 56.25 | A | 12.5 | 12.5 | 54.2 | 1370 |
| k | — | 75 | A | 12.5 | 12.5 | 43.0 | 1140 |

\* and \*\* see Table 2.

Examples XX and XXI

Of the polymer compositions of Examples I and IX the impact resistance \* at −20°C was determined. The values were 8.9 and 14.4 kJ/m², respectively.

**Claims**

1. Polymer composition based on a copolymer of an unsaturated nitrile, a substantially saturated rubber, a chlorinated polyethylene, and a vinylchloride polymer, this composition being characterized in that it comprises:
    a. 50—95 parts by weight of
        a.1 5—70% wt of one or more polymers obtained by polymerizing a mixture of
            10—90% wt styrene and/or styrene derivatives,
            90—10% wt acrylonitrile and/or methacrylonitrile, and
            0—20% wt of one or more other monomers, and
        a.2 95—30% wt vinylchloride polymer, and
    b. 5—50 parts by weight of
        b.1 a substantially saturated rubber, and
        b.2 chlorinated polyethylene,
in which overall polymer composition the vinylchloride polymer content is not lower than 25% by weight.

2. Polymer composition according to claim 1, characterized in that the quantity of rubber and chlorinated polyethylene together is at least 10%, related to the total polymer composition.

3. Polymer composition according to claim 1 or 2, characterized in that the quantity of rubber and chlorinated polyethylene is at most 40% wt., more in particular 30% wt.

7

4. Polymer composition according to any one of claims 1—3, characterized in that the substantially saturated rubber is chosen from the group consisting of butyl rubber, chlorobutyl rubber, acrylate rubber, ethylene-propylene rubber and ethylene-propylene-diene rubber.

5. Polymer composition according to claim 1, characterized in that the composition comprises:

a.1. 10—65% wt copolymer of styrene and acrylonitrile,

a.2. 25—80% wt polyvinylchloride,

b.1. 5—20% wt rubber,

b.2. 5—20% wt chlorinated polyethylene

c. 0—10% wt additives.

6. Object made in whole or in part of the polymer composition prepared according to one or more of the claims 1—5.

**Patentansprüche**

1. Polymerzusammensetzung auf der Basis eines Copolymers eines ungesättigten Nitrils, eines im wesentlichen gesättigten Kautschuks eines chlorierten Polyäthylens und eines Vinylchloridpolymers, dadurch gekennzeichnet, daß sie aus

a. 50—95 Masse-Teilen von

a.1 5—70 Masse-% eines oder mehrerer Polymeren erhalten durch Polymerisation eines Gemisches von

10—90 Masse-% Styrol und/oder Styrolderivaten,

90—10 Masse-% Acrylnitril und/oder Methacrylnitril, und

0—20 Masse-% eines oder mehrere anderer Monomeren, und

a.2 95—30 Masse-% Vinylchloridpolymer, und

b. 5—50 Masse-Teilen

b.1 eines im wesentlichen gesättigten Kautschuks und

b.2 chlorierten Polyäthylen, besteht.

2. Polymerzusammensetzung nach Anspruch 1, dadurch gekennzeichnet, daß die Menge an Kautschuk und chloriertem Polyäthylen zusammen wenigstens 10%, bezogen auf die gesamte Polymerzusammensetzung, beträgt.

3. Polymerzusammensetzung nach Anspruch 1 oder 2, dadurch gekennzeichnet, daß die Menge an Kautschuk und chloriertem Polyäthylen höchstens 40 Masse-%, insbesondere 30 Masse-%, beträgt.

4. Polymerzusammensetzung nach einem der Ansprüche 1—3, dadurch gekennzeichnet, daß der im wesentlichen gesättigte Kautschuk aus der Gruppe bestehend aus Butylkautschuk, Chlorbutylkautschuk, Acrylatkautschuk, Äthylen-Propylenkautschuk und Äthylen-Propylen-Dienkautschuk ausgewählt ist.

5. Polymerzusammensetzung nach Anspruch 1, dadurch gekennzeichnet, daß die Zusammensetzung aus

a.1 10—65 Masse-% Copolymer von Styrol und Acrylnitril

a.2 25—80 Masse-% Polyvinylchloride,

b.1 5—20 Masse-% Kautschuk

b.2 5—20 Masse-% chloriertem Polyäthylen

c. 0—10 Masse-% Zusätzen betsteht.

6. Gegenstand, erzeugt zur Gänze oder teilweise aus der nach einem oder mehreren der Ansprüche 1—5 hergestellten Polymerzusammensetzung.

**Revendications**

1. Composition polymère à base de copolymère d'un nitrile insaturé, d'un caoutchouc sensiblement saturé, d'un polyéthylène chloré et d'un polymère de chlorure de vinyle, cette composition étant caractérisée en ce qu'elle comprend

a. 50—95 parties en poids de

a.1. 5—70% en poids d'un ou plusieurs polymères obtenus par polymérisation d'un mélange de

10—90% en poids de styrène et/ou de dérivés du styrène, et

90—10% en poids d'acrylonitrile et/ou de méthacrylonitrile, et

0—20% en poids d'un ou plusieurs autres monomères, et

a.2. 95—30% en poids de polymère de chlorure de vinyle, et

b. 5—50 parties en poids de

b.1. un caoutchouc sensiblement saturé, et

b.2. un polyéthylène chloré,

la teneur en polymère de chlorure de vinyle dans l'ensemble de la composition polymère n'étant pas inférieure à 25% en poids.

2. Composition polymère selon la revendication 1, caractérisée en ce que la quantité de caoutchouc et de polyéthylène chloré ensemble est d'au moins 10%, par rapport au total de la composition polymère.

8

**0 045 992**

3. Composition polymère selon la revendication 1 ou 2, caractérisée en ce que la quantité de caoutchouc et de polyéthylène chloré est d'au plus 40% en poids, plus particulièrement de 30% en poids.

4. Composition polymère selon l'une quelconque des revendications 1 à 3, caractérisée en ce que le caoutchouc sensiblement saturé est choisi dans le groupe constitué par le caoutchouc butyle, le caoutchouc chlorobutyle, le caoutchouc acrylate, le caoutchouc éthylène-propylène et le caoutchouc éthylène-propylène-diène.

5. Composition polymère selon la revendication 1, caractérisée en ce que la composition contient:

a.1. 10—65% en poids d'un copolymère de styrène et d'acrylonitrile,

a.2. 25—80% en poids de polychlorure de vinyle,

b.1. 5—20% de caoutchouc,

b.2. 5—20% de polyéthylène chloré,

c   0—10% d'adjuvants.

6. Objet fait tout ou partie de la composition polymère préparée selon l'une ou plusieurs des revendications 1—5.

9